# EUROPÄISCHE PATENTANMELDUNG

(11) **EP 1 139 281 A2**
(43) Veröffentlichungstag der Anmeldung: **04.10.2001**
(21) Anmeldenummer: 01102951.9
(22) Anmeldetag: 08.02.2001
(51) Int. Cl.: G06K 19/077, G06K 19/08

(54) **Datenträgerkarte**

(30) Priorität: 31.03.2000 DE 10016283
(71) Anmelder: Orga Kartensysteme GmbH, 33104 Paderborn (DE)
(72) Erfinder: Juilfs, Adolf, 24220 Flintbek (DE)

(57) **Zusammenfassung**

Es wird eine Datenträgerkarte (1) für die Speicherung maschinenlesbarer Daten mit einem Kartenkörper (2) und mindestens einem auf einem aus dem Kartenkörper (2) manuell austrennbaren Teilbereich (3) des Kartenkörpers (2) angeordneten elektronischen Speicherbaustein (4) vorgestellt, auf deren Kartenkörper (2) erfindungsgemäß mindestens ein mit visuell lesbaren Daten und mit einer die Daten überdekkende mittels eines Abkratz- oder Abziehvorganges irreversibel entfernbare Abdekkung (6) versehenes Datenfeld (5) angeordnet ist.

Die Erfindung ermöglicht die Kombination von insbesondere im Mobilfunkbereich eingesetzten GSM/ESM-Plackkarten mit so genannten Voucherkarten zu Prepaid-Zwecken.

## Beschreibung

Die Erfindung betrifft eine Datenträgerkarte für die Speicherung maschinenlesbarer Daten mit einem Kartenkörper und mindestens einem auf einem aus dem Kartenkörper manuell austrennbaren Teilbereich des Kartenkörpers angeordneten elektronischen Speicherbaustein.

Datenträgerkarten der eingangs geschilderten gattungsgemäßen Art sind heutzutage im Bereich der Telekommunikation als GSM/SIM-Karten für Handys bereits weit verbreitet. Der aus dem Kartenkörper heraustrennbare Teilbereich mit dem elektronischen Speicherbaustein wird hierbei zur Benutzung eines Handys in eine bei diesem vorhandene Aufnahme eingesetzt, wodurch die auf dem Baustein gespeicherten Daten insbesondere für die Freischaltung, Gebühreninformationen und sonstige Kenndaten durch eine Lesevorrichtung des Handys erfasst werden können. Der nach dem Herausbrechen des austrennbaren Teilbereiches verbleibende Rest des Kartenkörpers, welcher für den Herstellprozess der gattungsgemäßen Datenträgerkarte notwendig hat, hat im beschriebenen Fall keine weitere Funktion und ist zur Entsorgung vorgesehen. Bei der Nutzung von Handys unterschiedet man prinzipiell zwischen solchen, die mit festen Kartenverträgen genutzt werden und anderen, bei der der Handynutzer sein Gerät im Rahmen eines vorher bezahlten Guthabens nutzt. Ein üblicher Weg zum Erwerben eines derartigen Guthabens besteht darin, Datenträgerkarten, sogenannte Voucherkarten zu erwerben, die mit einer verdeckten Seriennummer versehen sind, die der Handynutzer zur Kommunikation mit dem Handybetreiber benötigt, um das erworbene Guthaben für sein Handy freizuschalten. Nach der Freischaltung des Guthabens durch die Eingabe der auf der Voucherkarte vorhandenen Zahlen- oder Buchstabenkombination ist die entsprechende Karte wertlos und muss ebenfalls entsorgt werden. Es ist leicht vorstellbar, dass große Mengen an Datenträgerkartenabfall im Rahmen der immer weiter steigenden Handynutzung anfallen.

Aufgabe der vorliegenden Erfindung ist es daher, eine Datenträgerkarte der oben geschilderten gattungsgemäßen Art so weiterzuentwickeln, dass sie zusätzlich zu ihrer bislang vorgesehenen Nutzung als weitere Möglichkeit für die Freischaltung eines zusätzlichen Guthabens für das Telefonieren mit einem Handy genutzt werden kann.

Diese Aufgabe wird erfindungsgemäß dadurch gelöst, dass auf dem Kartenkörper mindestens ein mit visuell lesbaren Daten und mit einer die Daten überdeckenden mittels eines Abkratz- oder Abziehvorganges irreversibel entfernbaren Abdeckung versehenes Datenfeld angeordnet ist.

Diese erfindungsgemäße Ausgestaltung vereint somit die bislang üblichen GSM/SIM-Karten mit bislang separat zu erwerbenden Voucherkarten und reduziert den anfallenden Abfall um die Hälfte. Darüberhinaus entfallen Produktions- und Verpackungskosten für die bislang separat hergestellten Karten in nicht unbeträchtlichem Ausmaß.

Die Funktion der Datenträgerkarte besteht somit nicht mehr nur darin, den elektronischen Speicherbaustein auf dem austrennbaren Teilbereich des Kartenkörpers bereitzustellen sondern darüber hinaus auch darin, eine Geheiminformation für die Freischaltung eines Kontoguthabens zu beinhalten. Die Geheiminformation in Form einer aus Zahlen und/oder Buchstaben bestehenden Codenummer ist hierbei nach Entfernen einer die Codenummer überdeckenden Abdeckung zugänglich. Entsprechende Sicherheitsaspekte werden dadurch berücksichtigt, dass die mittels eines Abkratz- oder Abziehvorganges entfernbare Abdeckung hierbei in der Art zerstört wird, dass eine nachträgliche Wiederherstellung nicht möglich ist. Die Abdeckung kann hierbei ein aufzuklebendes oder aufzusiegelndes Etikett aus nicht durchsichtigem Material sein, welches mit mehreren Anstanzungen versehen ist. Darüber hinaus ist es denkbar, dass die Abdeckung mit einem Stördruck versehen ist, der verhindert, dass vor dem Entfernen der Abdeckung die darunter befindliche Codenummer sichtbar ist.

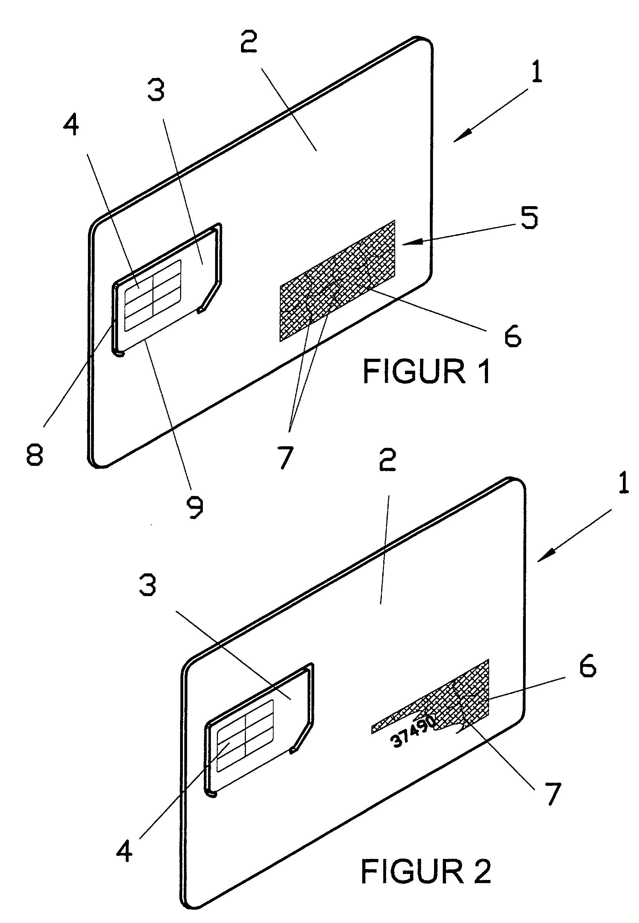

Im Folgenden wird ein Ausführungsbeispiel des Erfindungsgegenstandes anhand der beigefügten Zeichnungen näher erläutert. Es zeigen die Figuren 1 und 2 eine erfindungsgemäße Datenträgerkarte in perspektivischer Darstellung, wobei in der Figur 2 die über dem Datenfeld vorhandene Abdeckung teilweise entfernt worden ist.

Die in ihrer Gesamtheit mit 1 bezeichnete Datenträgerkarte besteht im Wesentlichen aus einem Kartenkörper 2, einem innerhalb des Kartenkörpers angeordneten Teilbereich 3 und einem auf diesem Teilbereich angeordneten elektronischen Speicherbaustein 4. Um den in diesem Ausführungsbeispiel rechteckig ausgebildeten Teilbereich 4 umlaufend befindet sich auf drei Kantenseiten ein Spalt 8, wobei die vierte Kantenseite noch mit dem übrigen Kartenkörper 2 verbunden ist. An dieser Längskante ist eine eingestanzte Andruckkante 9 vorhanden, die ein Abtrennen des Teilbereiches 3 im Bedarfsfalle erleichtert. Der Kartenkörper 2 ist in Form und Größe identisch mit denjenigen Abmaßen von Datenträgerkarten, die ohne austrennbaren Teilbereich beispielsweise als Kreditkarten, Zugangsberechtigungskarten, Geldkarten oder dgl. in hoher Zahl eingesetzt werden, so dass eine Herstellung auf den gleichen Fertigungseinrichtungen möglich ist. Der Kartenkörper ist hierbei vorzugsweise aus PVC, PC oder ABS hergestellt.

Erfindungsgemäß weist der Kartenkörper an einer seiner Flachseiten ein Datenfeld 5 auf, auf dem visuell lesbare Informationen angeordnet sind. Gemäß Figur 1 ist das Datenfeld 5 mit einer rechteckigen länglichen Abdeckung 6 versehen. Diese Abdekkung 6 kann ein aufzuklebendes oder aufzusiegelndes Etikett aus nicht durchsichtigem Material sein, welches mit mehreren Anstanzungen 7 versehen ist. Nach der Herstellung des Kartenkörpers 2 mit dem elektronischen Speicherbaustein 4 und dem Aufbringen der visuell lesbaren Daten in das Datenfeld 5 wird dieses abschließend mit dem Etikett 6 versehen, so dass die aufgebrachten Daten nicht mehr erkennbar sind. Das Etikett kann hierbei aus nicht durchsichtigem Material hergestellt sein oder als transparentes Material mit einem Stördruck überdeckt sein. Darüber hinaus ist es denkbar, dass nach Erstellung der Daten in dem Datenfeld auf direktem Wege eine weitere Abdeckung in Form eines Farbaufdruckes auf dem Kartenkörper im Bereich des Datenfeldes 5 aufgebracht wird, wobei die Abdeckung 6 gegenüber den darunter angeordneten Daten so leicht entfernbar ist, dass diese nach dem Abkratz- oder Abwischvorgang nach wie vor lesbar sind.

In der Figur 2 ist zur Verdeutlichung ein Teilbereich des Datenfeldes 5 bereits von der Abdeckung 6 befreit. Die Abdeckung 6 wird hierbei irreversibel zerstört, so dass eine Manipulation der Abdeckung des Datenfeldes 5 sofort erkennbar ist. Durch die Anstanzungen 7 der Abdeckung 6, die wellenförmig in unterschiedlicher Orientierung innerhalb der Abdeckung angeordnet sind, führt selbst ein vorsichtiges Abziehen des Klebeetikettes zu einem Zerreißen der das Etikett bildenden Trägerfolie, was bei einem Versuch der Wiederherstellung der Abdeckung auf jeden Fall sichtbar bleibt.

### Bezugszeichenliste

- 1.: Datenträgerkarte
- 2.: Kartenkörper
- 3.: Teilbereich
- 4.: Speicherbaustein
- 5.: Datenfeld
- 6.: Abdeckung
- 7.: Anstanzung
- 8.: Spalt
- 9.: Andruckkante

## Patentansprüche

1. Datenträgerkarte für die Speicherung maschinenlesbarer Daten mit einem Kartenkörper und mindestens einem auf einem aus dem Kartenkörper manuell austrennbaren Teilbereich des Kartenkörpers angeordneten elektronischen Speicherbaustein, **dadurch gekennzeichnet, dass** auf dem Kartenkörper mindestens ein mit visuell lesbaren Daten und mit einer die Daten überdeckende mittels eines Abkratz- oder Abziehvorganges irreversibel entfernbare Abdeckung versehenes Datenfeld angeordnet ist.

2. Datenträgerkarte nach Anspruch 1, **dadurch gekennzeichnet, dass** die Abdeckung ein aufzuklebendes oder aufzusiegelndes Etikett aus nicht durchsichtigem Material ist, welches mit mehreren Anstanzungen versehen ist.

3. Datenträgerkarte nach Anspruch 1, **dadurch gekennzeichnet, dass** die Abdeckung ein aufzuklebendes oder aufzusiegelndes mit einem Stördruck versehenes Etikett ist, welches mit mehreren Anstanzungen versehen ist.

4. Datenträgerkarte nach einem der Ansprüche 1 bis 3, **dadurch gekennzeichnet, dass** die visuell lesbaren Daten Buchstaben oder Zahlen sind.
